# EUROPEAN PATENT SPECIFICATION

(11) **EP 2 252 032 B1**
(45) Date of publication and mention of the grant of the patent: **24.06.2015**
(21) Application number: 09425181.6
(22) Date of filing: 11.05.2009
(51) Int. Cl.: H04L 29/08, H04L 29/06

(54) **Message adaptation system for system integration**
Mitteilungsanpassungssystem zur Systemintegration
Système d'adaptation de messages pour intégration de système

(43) Date of publication of application: 17.11.2010
(73) Proprietor: Accenture Global Services Limited, Dublin 4 (IE)
(72) Inventor: Di Bella, Dario, 00040 Monte Porzio Catone (RM) (IT)
(74) Representative: Müller-Boré & Partner Patentanwälte PartG mbB

(56) References cited:
- EP-A- 1 376 410
- EP-A- 2 075 967
- WO-A-03/073308
- FR-A- 2 858 152
- US-A1- 2004 111 533
- US-A1- 2006 112 174
- DIKAIAKOS M D: "Intermediary infrastructures for the World Wide Web" COMPUTER NETWORKS, ELSEVIER SCIENCE PUBLISHERS B.V., AMSTERDAM, NL, vol. 45, no. 4, 15 July 2004 (2004-07-15), pages 421-447, XP004512039 ISSN: 1389-1286
- HARIKUMAR A K ET AL: "An event driven architecture for application integration using web services" INFORMATION REUSE AND INTEGRATION, CONF, 2005. IRI -2005 IEEE INTERNAT IONAL CONFERENCE ON. LAS VEGAS, NV, USA AUG. 15-17, 2005, PISCATAWAY, NJ, USA,IEEE, 15 August 2005 (2005-08-15), pages 542-547, XP010834893 ISBN: 978-0-7803-9093-5

## Description

### BACKGROUND OF THE INVENTION

### 1. Technical Field.

This application relates to system integration, and more particularly relates to a message adaptation system supporting the integration of multiple processing systems such as those implemented by a telecommunications service provider.

### 2. Related Art.

Consumers continue to demand from the telecommunications industry more services, and rapid deployment of new services, while the complexity of the underlying technologies providing the services continues to increase. Multiple support systems and applications communicate through a complex web of connections to define, implement, and support the services for both residential and commercial consumers. The system architecture that implements the services plays a crucial role, with the consumer base making multi-billion dollar service purchasing decisions based in part on the number of available services, the reliability of the services, and the ability of the service provider to respond to customer requests for additional services and for troubleshooting existing services.

One of the significant technical challenges to integrating disparate processing systems is finding a way to allow the multiple processing systems to communicate messages to one another in a way that efficiently supports provisioning, execution, and maintenance of complex products and services. Thus, the technical challenges include providing a service processing architecture that provides efficient, robust, and fault tolerant service request orchestration and message handling through capable message communication between disparate systems running disparate applications. The already immense number of products, services, applications, and interacting systems further increase the burden of finding a technical solution to robust service order processing.

US 2006/0112174 A1 relates to a network system between a client and a server. The network system includes a user-defined ruleset for HTTP request rules and HTTP response rules. The user-defined rules include pre-determined actions to be taken relating to a connection and modification of a header or content of requests or responses. By applying the rules to HTTP requests or HTTP responses, , modified requests or modified responses are produced.

US 2004/0111533 A1 relates to a web service as an intermediate service for transforming data received by a web service into an input format required by another web service. Due to the transformation by the intermediate web service, a web service can utilize the functionality of another web service, even if the web service uses an incompatible format. For the transformation, an XSLT stylesheet is used.

FR-A-2 858 152 relates to a method for automatic managing of fields of a header in a transfer protocol. According to the French application, an intercept module intercepts a request from a user terminal to a server and stores an address such as an URI. A response from the server is also intercepted by the module to modify a field of a header of the response in correspondence with the address according to a predetermined management rule.

EP-A-2 075 967 relates to a messaging architecture that extends the communication capability of complex systems in existing enterprises. The message architecture transforms an outbound message from an order management system according to a transformation ruleset. In response to the transformed message, a freight system sends an inbound message responsive to the transformed message back to the order management system, thereby transforming the inbound message according to a ruleset. The rulesets specify various modifications such as field addition, data modification and format conversion.

### SUMMARY

In one implementation, a message interface system includes a memory storing a request message parameter map. The request message parameter map includes message parameter parking indicators. The memory also includes message translator logic that helps ensure message compatibility between interacting systems.

The message translator logic receives a source request message from a source system, reads the message parameter parking indicators, and determines whether the source request message includes one or more matching message parameters that match any of the message parameter parking indicators. When a matching message parameter-is-found, the message translator logic removes the matching message parameter from the source request message to obtain a modified request message that omits the matching message parameter. The message translator logic stores in a holding area the matching message parameter, and communicates the modified request message to a destination system.

The message translator logic receives a response message from the destination system arising from communication of the modified request message. The message translator logic retrieves the matching message parameter unchanged from the holding area, and adds the matching message parameter to the response message to obtain a modified response message. The modified response message is communicated back to the source system.

Other systems, methods, features and advantages will be, or will become, apparent to one with skill in the art upon examination of the following figures and detailed description. All such additional systems, methods, features and advantages are included within this description, are within the scope of the invention, and are protected by the following claims.

### BRIEF DESCRIPTION OF THE DRAWINGS

The system may be better understood with reference to the following drawings and description. The elements in the figures are not necessarily to scale, emphasis instead being placed upon illustrating the principles of the system. In the figures, like-referenced numerals designate corresponding features throughout the different views.
Figure 1 shows a system architecture in which a source system communicates through a message interface system with a destination system.
Figure 2 shows message flow through the system architecture.
Figure 3 shows message flow through the system architecture.
Figure 4 shows an example implementation of a message interface system.
Figure 5 shows a flow diagram of logic that message translator logic in the message interface system may execute.
Figure 6 shows a source message parameter map and a modified request message.
Figure 7 shows a response message parameter map for a response message arising from communication of the modified request message and a modified response message.

### DETAILED DESCRIPTION OF THE PREFERRED EMBODIMENTS

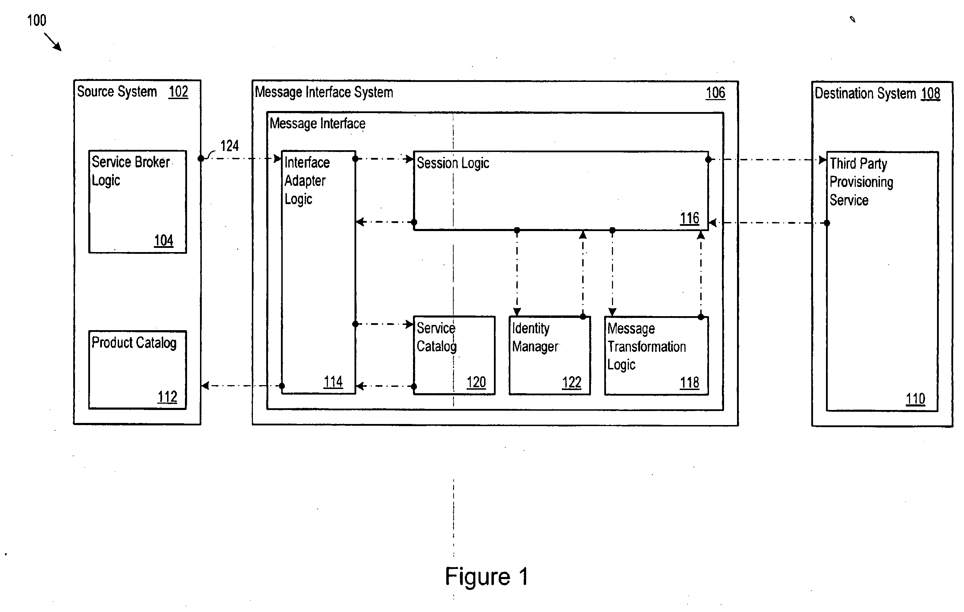

Figure 1 shows a system architecture 100 in which a source system 102 communicates through a message interface system 106 with a destination system 108. As one example, the source system 102 may include service broker logic 104 responsible for handling any particular set of telecommunications products and services by itself, or with the support of the destination system 108. The destination system 108 may execute a Hosted Messages and Collaboration (HMC) platform running Microsoft™ Provisioning Services or other provisioning logic 110 for providing an email server or other telecommunications services. The message interface system 106 handles message communication between the source system 102 and the destination system 108. The message interface system 106 may be implemented with, for example, a Microsoft™ Connected Services Framework (CSF) platform.

The source system 102 is often implemented with a technology that differs from the destination system 108. For example, the source system 102 may be a Java or Java 2 Enterprise Edition (J2EE) platform. Furthermore, the source system 103 may include its own complex product catalog 112 that defines the products and services available from the source system 102. As a result, the source system 102 may adhere to message protocols, formats, and content that is not natively compatible with the destination system 108. This is one reason that the message interface system 106 processes messages flowing between the source system 102 and the destination system 108. The message interface system 106 facilitates the source system 102 and the destination system 108 collaborating and providing additional, different, or extended telecommunications products and services to the consumer as compared to those available from the source system 102. In the example described above, the message interface system 106 allows subscribers to the source system 102 to obtain electronic mail service from the destination system 108.

In some implementations, the message interface system 106 may support message passing mechanisms that differ from those that the source system 102 uses. For example, the message interface system 106 may support only asynchronous message calls. In such a case, the source system 102 may nevertheless support synchronous threads by sleeping the incoming synchronous thread while making an asynchronous call to the message interface system 106 to handle the request present in the synchronous thread. When the asynchronous response arrives, the message interface system 106 or source system 102 may wake the sleeping thread and pass the asynchronous response back to the synchronous thread.

The message interface system 106 may include message adapter logic 114 and session logic 116. The message transformation logic 118, service catalog 120, and identity manager 122 support the message adapter logic 114 and session logic 116. The components described above may communicate using web services interfaces 124, as shown by broken connection lines in Figure 1. However, any other message passing mechanisms may be employed, such as shared memory, remote procedure calls, and the like. The service catalog 120 may be a Universal Description Discovery and Integration (UDDI) catalog that defines the web services that can be invoked to allow the architecture components to communicate with one another. The service catalog 120 may dynamically map service identifiers and their corresponding Uniform Resource Locators (URLs).

The session logic 116 provides a collaboration context for messages passing through the message interface system 106. A session may be described by a Session Manifest, an extensible Markup Language (XML) document that specifies the list of services participating in the message collaboration and the security requirement for the web services calls. The identity manager 122 provides identity mapping functionality in support of authentication of subscriber credentials that the provisioning logic 110 requires for differing incoming requests. The identify manager 122 may be configured to interoperate with an Microsoft ™ Enterprise Single Sign-On server to map primary credentials of incoming requests to the secondary credential that is required by the receiving service, in this case the provisioning logic 110.

The message interface system 106 implements a subsystem framework through which the source system 102 interacts with value added services provided by the destination system 108. The message interface system 106 provides the message collaboration and transformation that the source system 102 uses to send a request for value added services provided by the destination system 108. In particular, the interface adapter logic 114 acts as a gateway into the destination system 108 and its provisioning logic 110. The interface adapter logic 114 exposes endpoints through which the source system 102 sends provisioning logic 110 operations in a desired format, such as one adhering to a Common Data Model (CDM).

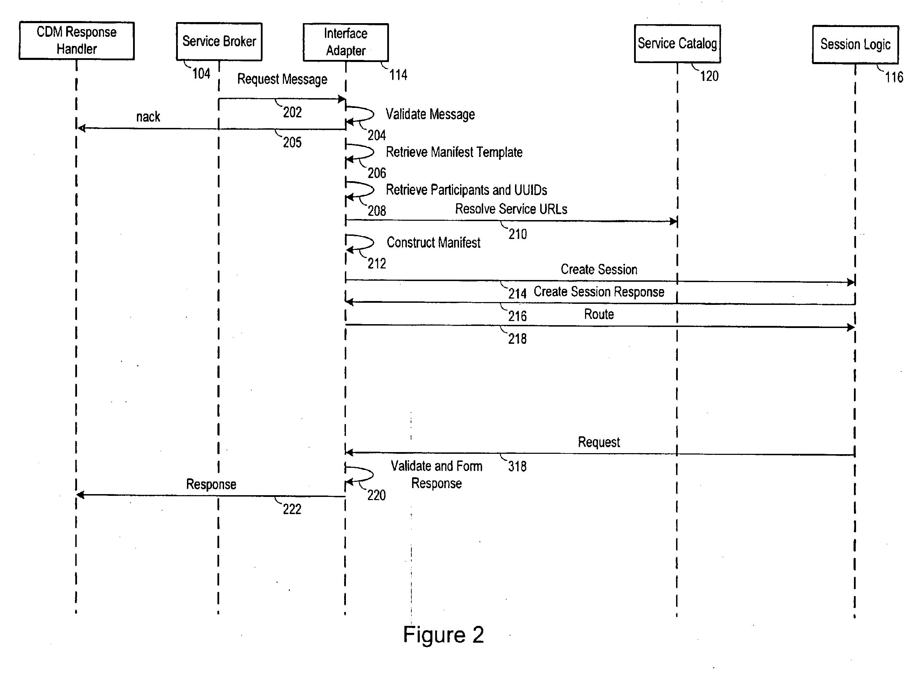

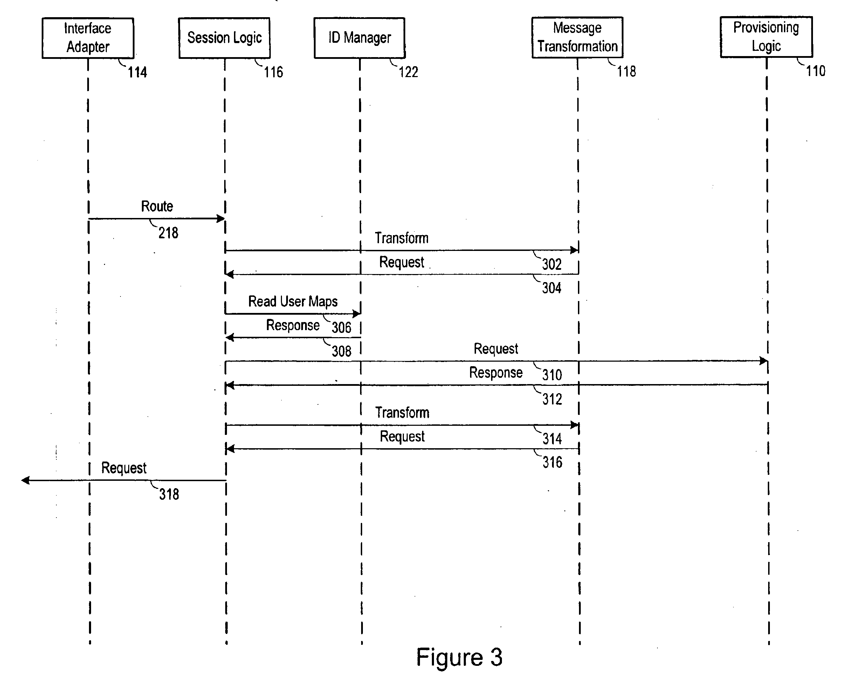

Figures 2 and 3 show message flow 200 and 300 through the system architecture 100. In particular, the interface adapter logic 114 receives (202) source request messages from the source system 102. Upon receiving a source request message, the interface adapter logic 114 may execute the following operations: validation of the incoming common data model message against extensible Stylesheet Language Transformations (XSLT) stored in an XLST repository or other database associated with the service request (204); sending an asynchronous Non-acknowledge (nack) reply to the source system 102 if message is not valid (205); retrieving a session manifest template for the specified action (206); retrieving from the service catalog database the participants for executing the service request and retrieving from the service catalog 120 the universally unique identifiers (UUIDs) for the participants (208).

The interface adapter logic 114 may further: resolve URLs for the specified UUIDs by making web service calls to the service catalog 120 (210); construct the session manifest (212); store the context of the service requester in the header of an outgoing message (e.g., a Simple Object Access Protocol (SOAP) message); and execute a web services call to the session logic 116 to create the session (214). Upon receiving a success response from the session logic 116 (216), the interface adapter logic 114 may: retrieve the Session ID from the header in the success response; and route the common data model source request message to the created session using the retrieved Session ID (218).

In that regard, the session logic 116 calls the message transformation logic 118, which receives a message transformation request (302) and returns the transformed message to the session logic 116 (304). The session logic 116 interacts with the identity manager 122 to obtain identity mapping functionality (306) in support of authentication of subscriber credentials that the provisioning logic 110 requires for differing incoming requests, and receives a response (308).

The session logic 116 then communicates the transformed request to the provisioning logic 110 for execution (310). Logic within the architecture 100, such as the session logic 116, optionally parks and restores message parameters before each message transformation. For example, the message translator logic 414 or session logic 116 may recognize that there are message parameters to park (or to retrieve from temporary storage) by parsing message definitions (e.g., using XSLT or XQuery) to invoke the message parameter temporary storage to locate, store or retrieve, and map or remove parked parameters to or from the desired place in a message. However, the architecture 100 may implement logic to park or restore message parameters prior to or subsequent to other processing operations. When a response message arrives (312) from the destination system 106, the session logic 116 calls the message transformation logic 118 to convert the response message to the format needed by the source system 102. To that end, the session logic 116 sends a message transformation request (314), and receives the transformed response (316), which is passed back to the interface adaptor logic 114 (318). As noted above, message parameter restoration may occur prior to the message transformation request.

With reference again to Figure 2, the interface adapter logic 114 may process the transformed response as follows: validate the common data model response message against an XSLT file associated with the response action; retrieve the context of the original requester from the SOAP envelope; construct a new SOAP envelope; set the SOAP header based on the original context retrieved; and set the SOAP body to contain the common data model response message (220). The interface adapter logic 114 then routes the response envelope to a response handler in the source system 102 (222).

As noted above, the message transformation logic 118 transforms messages before they are sent to their destination. To that end, the message transformation logic 118 receives transformation requests, and in response executes the following: retrieve the transformation rule (e.g., an XSLT rule or rules) associated with the specified action (e.g., from a transformation rule database); run the message through the XSLT processor to transform the message; and return the transformed message back to the session for further processing.

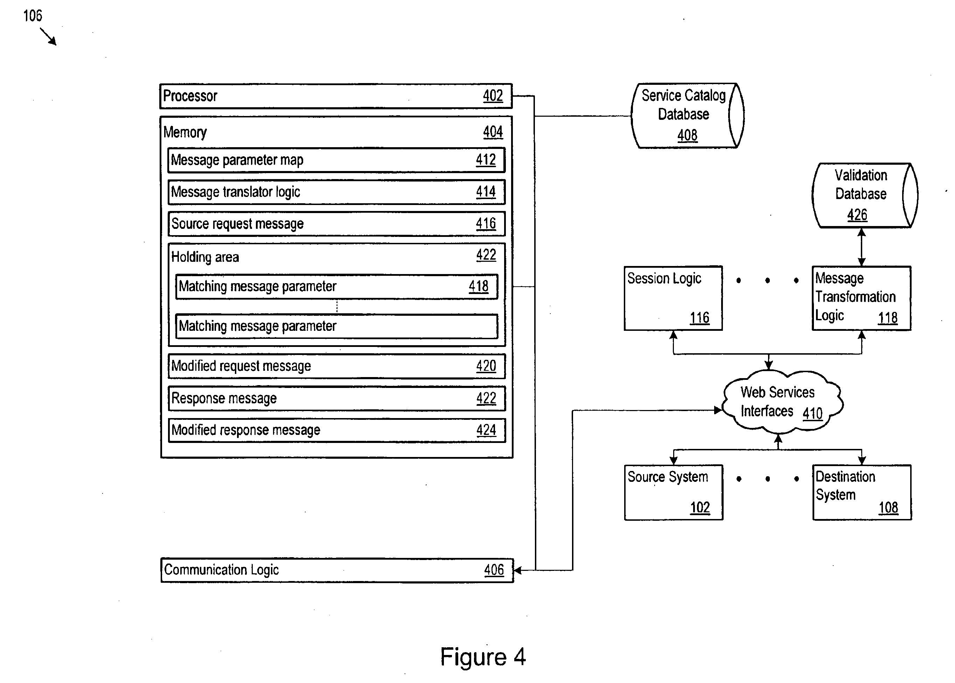

Figure 4 shows an example implementation of certain processing functionality in a message interface system 106. The messaging interface system 106 includes a processor 402, a memory 404, and communication logic 406. The communication logic 406 connects with the service catalog 120 database 40 8, for example to determine the participants for executing service requests and the universally unique identifiers (UUIDs) for the participants. Additional databases may also be present, such a validation database 426 that stores XLST validation files for messages. The communication logic 406 communicates over interfaces such as the web services interfaces 410 with external systems, such as the source system 102 and destination system 108, as well as with internal systems, such as the session logic 116 and the message transformation logic 118.

The memory 404 includes a request message parameter map 412 that, as explained in more detail below, includes message parameter parking indicators. The memory also stores message translator logic 414, which may be included in the interface adapter logic 114, the message transformation logic 118, or in other places in the message interface system 106.

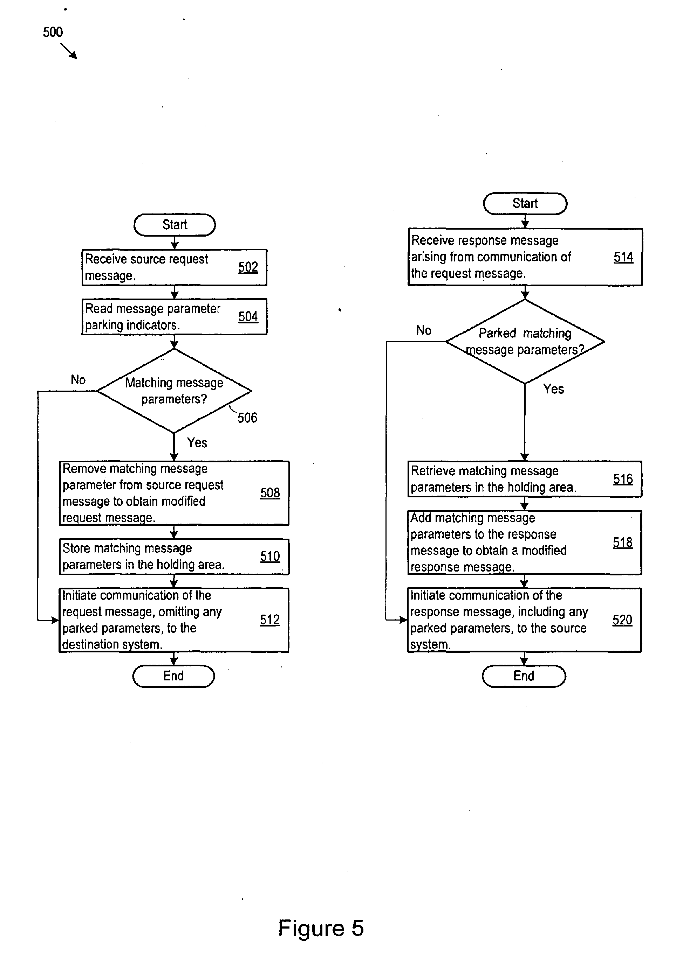

With reference to Figures 4 and 5, the message translator logic 414 receives a source request message 416 from the source system 102 (502). The message translator logic 414 reads the message parameter parking indicators (504). The message translator logic 414 analyzes the message parking indicators for values that specify whether one or more matching message parameters 418 in the source request message should be parked (506).

The message translator logic 414 removes the matching message parameters 418 from the source request message 416 (508). A modified request message 420 results, and omits the matching message parameter 418. The modified request message 420 retains (or selectively deletes non-required parameters without parking) the remainder of the parameters from the source request message 416. The message transformation logic 118 may be invoked at any time to add, delete, modify, rename, or otherwise adapt the parameters to meet a format required by the destination system 108). The message translator logic 414 stores in a holding area 422 the matching message parameters 418 (510) where they are parked until needed later. The message translator logic 414 may then initiate communication of the modified request message 420 to the destination system 108 (512).

In response to the modified request message 420, the destination system 108 performs its processing and returns a response message to the message interface system 106. The message translator logic 414 receives the response message 422 arising from communication of the modified request message 420 (514). When there are parked matching message parameters 418 corresponding to the modified request message that gave rise to the response message, the message translator logic 414 retrieves the matching message parameter 418 unchanged from the holding area 422 (516) and adds the matching message parameters to the response message to obtain a modified response message 424 (518). For example, matching message parameters parked from a source request message ExchangeEnableOrganizationRequest may be retrieved and added back to a corresponding response message ExchangeEnableOrganizationResponse. The message translator logic 414 initiates communication of the modified request message 420 to the source system 102 (520).

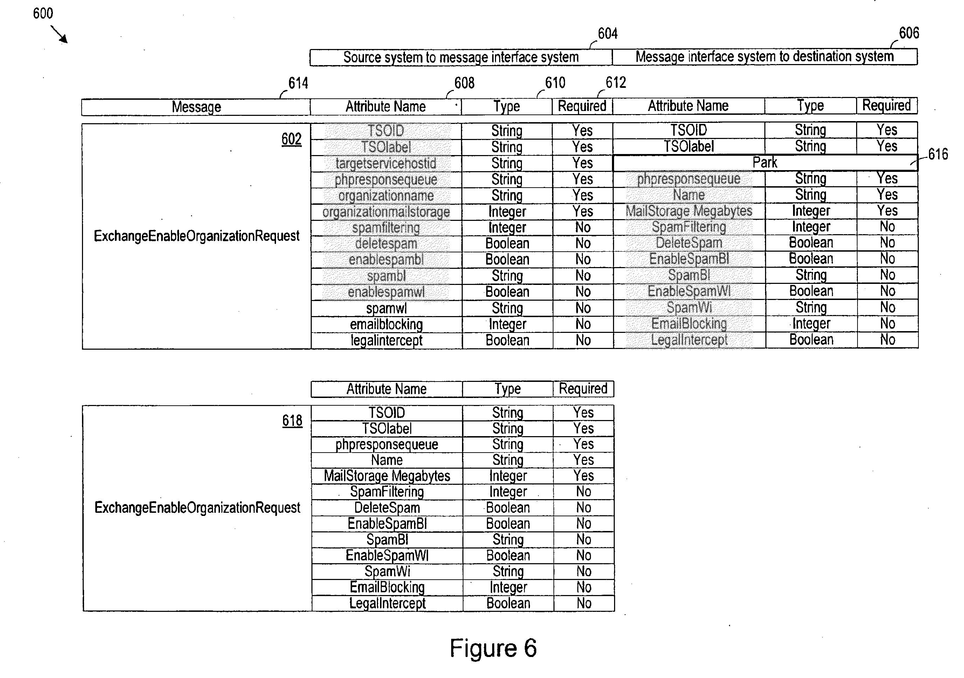

Figure 6 shows a source message parameter map 600 for an ExchangeEnabteOrganizationRequest message 602. Any number of such source message parameter maps may be established in the message interface system 106. The source message parameter maps may be encoded in XLST transformation rules or other rules, dedicated program code that specifies, selects, or formats parameters for messages, or in other manners.

The source message parameter map 600 may include a source system to message interface system section 604 that specifies source request message content as received from the source system 102 at the interface adapter logic 114. The source message parameter map 600 may also include a message interface system to provisioning system section 606 that specifies the content of the request message for delivery to the destination system 108. As examples, the source message parameter map 600 may specify message attribute names 608, attribute types 610 (e.g., string or integer), attribute required status 612 (e.g., yes or no), as well as the message name 614.

Furthermore, the source message parameter map 600 may include message parameter parking indicators, such as the indicator 616. The indicator 616 may be implemented as examples, as a text field or numeric value that is part of a record including a parameter name. The message parameter parking indicator 616 informs the message translator logic 414 about whether the associated parameter should be stored in the holding area 422 and removed from the source request message 416 to create the modified request message 420. The message parameter parking indicators specify which parameters need not be provided to the destination system 108 for executing the service request, but yet may need to be returned to the source system 102 as part of the complete message exchange for executing the service request (e.g., due to message format or content incompatibilities in the implementation of the systems 102 and 108). Among others, two beneficial technical results are that the message interface system 106 is more robust to message corruption because less data needs to be exchanged between systems, and that the exchanged messages are simplified and require less overhead because they pass only the parameters required by the destination system 108.

In the example shown in Figure 6, the technical service order identifier (TSOID) is a required string parameter. The spamfiltering parameter is a non-required integer parameter (that may optionally be included in the message to the destination system 108). As another example, the targetservicehostid parameter is a required string parameter that should be parked (i.e., not provided to the destination system 108), as noted by the message parameter parking indicator 616.

Figure 6 also shows the modified request message 618 for ExchangeEnableOrganizationRequest. The modified request message 618 omits the targetservicehostid parameter as specified by the message parameter parking indicator 616. In particular, the message interface system 106 has removed the targetservicehost id parameter from the source request message 602 and placed the parameter in the holding area 422.

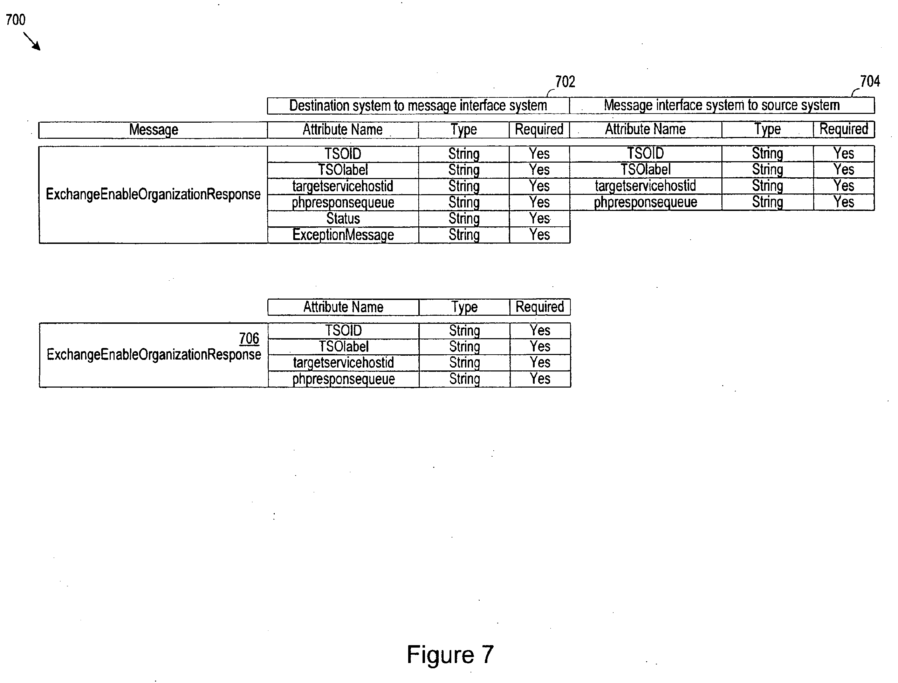

Figure 7 shows a response message parameter map 700. The response message parameter map 700 may specify the formal of messages returned in response to communication of the modified request message 618. Figure 7 also shows a modified request message 702. Any number of such response message parameter maps may be established in the message interface system 106.

The response message parameter map 700 may include a destination system to message interface system section 702 that specifies request response message content. In other words, the section 702 shows content of a response message as received from the destination system 108 at the messaging interface system 106. The response message parameter map 700 may also include a message interface system to source system section 704 that specifies the content of the response message as it should be delivered to the source system 102. The response message parameter map 700 may specify message attribute names, attribute types (e.g., string or integer), attribute required status (e.g., yes or no), as well as the response message name.

Figure 7 also shows a modified response message 706. The modified response message 706 includes the targetsrevicehostid parameter. The message interface system 106, using the session logic 116, translator logic 414, or other logic, retrieved the targetservicehostid parameter from the temporary message parameter holding area, having recognized that that targetservicehostid parameter corresponded to a parked message parameter for the source request message corresponding to the ExchangeEnableOrganizationResponse message. The message translator logic 414 or session logic 116 (as examples) may recognize that there are parked parameters to retrieve and append to the response message by parsing message definitions (e.g., using XSLT or XQuery) to invoke the message parameter temporary storage to locate, retrieve, and map parked parameters to the desired place in a message. However, in other implementations, the message interface system 106 may store or retrieve parked message parameters based on analysis of context identifiers, message identifiers, or other identifiers returned with the response message or generated by the message interface system 106 when it receives the response message.

The message translator system 106 sends the modified response message 706 back to the source system 102. Because the modified response message 706 includes the parked parameters, the source system 102 has the information it needs to complete processing of the service request. At the same time, the message translator system 106 reduced the complexity and overhead associated with communicating messages to the destination system 108 and extending the functionality of the source system 102 over the capabilities provided by the destination system 108.

In the complex applications running today, the support architecture cannot simply translate a message from one format to another. Instead, interoperability is greatly facilitated by much more sophisticated management of messages, including translation, authorization, collaboration context management, message parking and parameter adaptation, as well as making sure that the right entities are participating in the message exchange and managing the exchange in a robust framework. The message interface system 106 facilitates such complex message handing.

The systems and logic described above may be implemented in many different ways. For example, although some features are shown stored in computer-readable memories (e.g., as logic implemented as computer-executable instructions or as data structures in memory), all or part of the system and its logic and data structures may be stored on, distributed across, or read from other machine-readable media. The media may include hard disks, floppy disks, CD-ROMs, a tangible signal, such as a signal received from a network or received over multiple packets communicated across the network.

The systems and logic may be implemented with additional, different, or fewer components. As one example, a processor may be implemented as a microprocessor, a microcontroller, a DSP, an application specific integrated circuit (ASIC), discrete logic, or a combination of other types of circuits or logic. As another example, memories may be DRAM, SRAM, Flash or any other type of memory. The processing capability of the systems may be distributed among multiple components, such as among multiple processors and memories, optionally including multiple distributed processing systems. Parameters, databases, and other data structures may be separately stored and managed, may be incorporated into a single memory or database, may be logically and physically organized in many different ways, and may implemented with different types of data structures such as linked lists, hash tables, or implicit storage mechanisms. Logic, such as programs or circuitry, may be combined or split among multiple programs, distributed across several memories and processors, and may be implemented in a library, such as a shared library (e.g., a dynamic link library (DLL)). The DLL, for example, may store code that identifies, stores, and retrieves message parameters, builds a destination system message, a source system message, or that performs other processing.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A message interface system (106) comprising:
a memory (404) operable to store:
a request message parameter map (412) comprising message parameter parking indicators (616), wherein the message parameter parking indicators (616) specify which parameters need not be provided to a destination system (108) but need to be returned to a source system (102); and wherein the message parameter parking indicators (616) are each implemented as a text field or a numeric value;
a message translator logic (414) operable to:
receive a source request message (416) from the source system (102); read the message parameter parking indicators (616);
determine whether the source request message (416) includes a matching message parameter (418) that matches any of the message parameter parking indicators (616);
remove the matching message parameter (418) from the source request message (416) to obtain a modified request message (420) that omits the matching message parameter (418), as specified in the message parameter parking indicators (616);
store in a holding area (422) the matching message parameter (418); communicate the modified request message (420) to the destination system (108);
receive a response message (422) arising from communication of the modified request message (420);
retrieve the matching message parameter (418) unchanged from the holding area (422);
add the matching message parameter (418) to the response message (422) to obtain a modified response message (424) which includes the unchanged matching message parameter (418); and communicate the modified response message (424) to the source system (102); and
a processor (402) operable to execute the message translator logic.

2. The system of any one of the preceding claims, further comprising:
a web services interface (410) for receiving the source request message (416) from the source system (102).

3. The system of any one of the preceding claims, where the message translator logic (414) further is operable to:
determine the matching message parameter (418) for retrieval from the holding area (422) based on context provided with the response message (422).

4. The system of any one of the preceding claims, further comprising:
message transformation logic (118) operable to convert the source request message (416) into a format required by the destination system (108).

5. A computer-implemented interface method comprising:
storing a request message parameter map comprising message parameter parking indicators (616) in memory (404), wherein the message parameter parking indicators (616) specify which parameters need not be provided to a destination system (108) but need to be returned to a source system (102); and wherein the message parameter parking indicators (616) are each implemented as a text field or a numeric value;
receiving (502) a source request message (416) from the source system (102);
reading (504) the message parameter parking indicators (616);
determining (506) whether the source request message (416) includes a matching message parameter (418) that matches any of the message parameter parking indicators (616);
removing (508) the matching message parameter (418) from the source request message to obtain a modified request message (420) that omits the matching message parameter (418), as specified in the message parameter parking indicators (616);
storing (510) in a holding area (422) the matching message parameter (418);
communicating (512) the modified request message (420) to the destination system (108);
receiving (514) a response message arising from communication of the modified request message;
retrieving (516) the matching message parameter (418) unchanged from the holding area;
adding (518) the matching message parameter (418) to the response message to obtain a modified response message which includes the unchanged matching message parameter (418); and
communicating (520) the modified response message to the source system (102).

6. The method of claim 5, further comprising:
receiving the source request message from the source system through a web services interface.

7. The method of any one of the preceding claims 5 or 6 , further comprising:
determining the matching message parameter (418) for retrieval from the holding area based on context provided with the response message.

8. The method of any one of the preceding claims 5 to 7, further comprising:
executing message transformation logic to convert the source request message into a format required by the destination system.

9. A computer program product comprising logic that when executed carries out the method of any of claims 5 - 8.

## Patentansprüche

1. Ein Nachrichten-Interface System (106), das Folgendes umfasst:
einen Speicher (404) der dazu betriebsbereit ist, Folgendes zu speichern:
einen Anforderungsnachricht-Parameterplan (412), der Nachrichtenparameter-Parkindikatoren (616) umfasst, wobei die Nachrichtenparameter-Parkindikatoren (616) spezifizieren, welche Parameter einem Zielsystem (108) nicht zur Verfügung gestellt werden müssen, aber einem Quellsystem (102) zurückgeschickt werden müssen;
und wobei die Nachrichtenparameter-Parkindikatoren (616) jeweils als Textfeld oder als numerischer Wert implementiert werden;
eine Nachrichtenübersetzungslogik (414), die zu Folgendem betriebsbereit ist:
empfangen einer Quellen-Anforderungsnachricht (416) aus dem Quellsystem (102);
lesen der Nachrichtenparameter-Parkindikatoren (616);
bestimmen, ob die Quellen-Anforderungsnachricht (416) einen treffenden Nachrichtenparameter (418) enthält, der zu irgendeinem der Nachrichtenparameter-Parkindikatoren (616) passt;
entfernen des treffenden Nachrichtenparameters (418) von der Quellen-Anforderungsnachricht (416) zum Erhalt einer modifizierten Anforderungsnachricht (420), die den treffenden Nachrichtenparameter (418) weglässt, wie er in den Nachrichtenparameter-Parkindikatoren (616) spezifiziert wird;
speichern des treffenden Nachrichtenparameters (418) in einem Wartebereich (422);
kommunizieren der modifizierten Anforderungsnachricht (420) an das Zielsystem (108);
empfangen einer Antwortnachricht (422), die aus der Kommunikation der modifizierten Anforderungsnachricht (420) hervorgeht;
abrufen des treffenden Nachrichtenparameters (418), unverändert, aus dem Wartebereich (422);
hinzufügen des treffenden Nachrichtenparameters (418) zur Antwortnachricht (422) zum Erhalt einer modifizierten Antwortnachricht (424), die den unveränderten treffenden Nachrichtenparameter (418) enthält; und
kommunizieren der modifizierten Antwortnachricht (424) an das Quellsystem (102); und
einen Prozessor (402), der zur Ausführung der Nachrichtenübersetzungslogik betriebsbereit ist.

2. Das System nach irgendeinem der vorhergehenden Ansprüche, das des Weiteren Folgendes umfasst:
eine Web-Services-Schnittstelle (410) zum Empfang der Quellen-Anforderungsnachricht (416) vom Quellsystem (102).

3. Das System nach irgendeinem der vorhergehenden Ansprüche, wobei die Nachrichtenübersetzungslogik (414) des Weiteren zu Folgendem betriebsbereit ist:
bestimmen des treffenden Nachrichtenparameters (418) zur Abfrage aus dem Wartebereich (422) aufgrund von Kontext, der mit der Antwortnachricht (422) bereitgestellt wird.

4. Das System nach irgendeinem der vorhergehenden Ansprüche, das des Weiteren Folgendes umfasst:
eine Nachrichtentransformationslogik (118), die zur Konversion der Quellen-Anforderungsnachricht (416) in ein vom Zielsystem (108) benötigtes Format betriebsbereit ist.

5. Ein computerimplementiertes Schnittstellen-Verfahren, das Folgendes umfasst:
speichern in einem Speicher (404) eines Anforderungsnachricht-Parameterplans (412), der Nachrichtenparameter-Parkindikatoren (616) umfasst, wobei die Nachrichtenparameter-Parkindikatoren (616) spezifizieren, welche Parameter einem Zielsystem (108) nicht zur Verfügung gestellt werden müssen, aber einem Quellsystem (102) zurückgeschickt werden müssen; und wobei die Nachrichtenparameter-Parkindikatoren (616) jeweils als Textfeld oder als numerischer Wert implementiert werden;
empfangen (502) einer Quellen-Anforderungsnachricht (416) aus dem Quellsystem (102);
lesen (504) der Nachrichtenparameter-Parkindikatoren (616);
bestimmen (506), ob die Quellen-Anforderungsnachricht (416) einen treffenden Nachrichtenparameter (418) enthält, der zu irgendeinem der Nachrichtenparameter-Parkindikatoren (616) passt;
entfernen (508) des treffenden Nachrichtenparameters (418) von der Quellen-Anforderungsnachricht zum Erhalt einer modifizierten Anforderungsnachricht (420), die den treffenden Nachrichtenparameter (418) weglässt, wie er in den Nachrichtenparameter-Parkindikatoren (616) spezifiziert wird;
speichern (510) des treffenden Nachrichtenparameters (418) in einem Wartebereich (422);
kommunizieren (512) der modifizierten Anforderungsnachricht (420) an das Zielsystem (108);
empfangen (514) einer Antwortnachricht, die aus der Kommunikation der modifizierten Anforderungsnachricht hervorgeht;
abrufen (516) des treffenden Nachrichtenparameters (418), unverändert, aus dem Wartebereich;
hinzufügen (518) des treffenden Nachrichtenparameters (418) zur Antwortnachricht zum Erhalt einer modifizierten Antwortnachricht, die den unveränderten treffenden Nachrichtenparameter (418) enthält; und
kommunizieren (520) der modifizierten Antwortnachricht an das Quellsystem (102).

6. Das Verfahren nach Anspruch 5, das des Weiteren Folgendes umfasst:
empfangen der Quellen-Anforderungsnachricht vom Quellsystem durch eine Web-Services-Schnittstelle.

7. Das Verfahren nach irgendeinem der vorhergehenden Ansprüche 5 oder 6, das des Weiteren Folgendes umfasst:
bestimmen des treffenden Nachrichtenparameters (418) zum Abruf aus dem Wartebereich aufgrund von Kontext, der mit der Antwortnachricht bereitgestellt wird.

8. Das Verfahren nach irgendeinem der vorhergehenden Ansprüche von 5 bis 7, das des Weiteren Folgendes umfasst:
ausführen einer Nachrichtentransformationslogik, um die Quellen-Anforderungsnachricht in ein vom Zielsystem benötigtes Format zu konvertieren.

9. Ein Computerprogrammprodukt, die eine Logik umfasst, die, wenn sie ausgeführt wird, das Verfahren nach irgendeinem der Ansprüche 5 - 8 durchführt.

## Revendications

1. Un système d'interface de message (106) comprenant :
une mémoire (404) exploitable pour stocker :
une carte de paramètres de message de demande (412) comprenant des indicateurs de stationnement de paramètre de message (616), sachant que les indicateurs de stationnement de paramètre de message (616) spécifient quels paramètres ne sont pas nécessairement à fournir à un système cible (108) mais sont à renvoyer à un système source (102) ; et sachant que les indicateurs de stationnement de paramètre de message (616) sont chacun mis en oeuvre sous forme de champ texte ou de valeur numérique ;
une logique de traduction de message (414) exploitable pour :
recevoir un message de demande de source (416) de la part du système source (102) ;
lire les indicateurs de stationnement de paramètre de message (616) ;
déterminer si le message de demande de source (416) contient un paramètre apparié de message (418) correspondant à n'importe lequel parmi les indicateurs de stationnement de paramètre de message (616) ;
supprimer le paramètre apparié de message (418) du message de demande de source (416) pour obtenir un message de demande modifié (420) qui ne comprend pas le paramètre apparié de message (418), en tant que spécifié dans les indicateurs de stationnement de paramètre de message (616) ;
stocker le paramètre apparié de message (418) dans une zone d'attente (422) ;
communiquer le message de demande modifié (420) au système cible (108) ;
recevoir un message de réponse (422) résultant de la communication du message de demande modifié (420) ;
récupérer le paramètre apparié de message (418) sous forme inchangée de la zone d'attente (422) ;
ajouter le paramètre apparié de message (418) au message de réponse (422) pour obtenir un message de réponse modifié (424) qui contient le paramètre apparié de message (418) inchangé ; et
communiquer le message de réponse modifié (424) au système source (102) ; et
un processeur (402) exploitable pour exécuter la logique de traduction de message.

2. Le système d'après une des revendication précédentes, comprenant en outre :
une interface de service web (410) pour recevoir le message de demande de source (416) du système source (102).

3. Le système d'après une des revendication précédentes, sachant que la logique de traduction de message (414) est en outre exploitable pour :
déterminer le paramètre apparié de message (418) pour la récupération à partir de la zone d'attente (422) en se basant sur un contexte fourni avec le message de réponse (422).

4. Le système d'après une des revendication précédentes, comprenant en outre:
logique de transformation de message (118) exploitable pour convertir le message de demande de source (416) en un format requis par le système cible (108).

5. Un procédé d'interface mise en oeuvre par ordinateur, comprenant le fait de :
stocker une carte de paramètres de message de demande comprenant des indicateurs de stationnement de paramètre de message (616) dans une mémoire (404), sachant que les indicateurs de stationnement de paramètre de message (616) spécifient quels paramètres ne sont pas nécessairement à fournir à un système cible (108) mais sont à renvoyer à un système source (102) ; et sachant que les indicateurs de stationnement de paramètre de message (616) sont chacun mis en oeuvre sous forme de champ texte ou de valeur numérique ;
recevoir (502) un message de demande de source (416) de la part du système source (102) ;
lire (504) les indicateurs de stationnement de paramètre de message (616) ;
déterminer (506) si le message de demande de source (416) contient un paramètre apparié de message (418) correspondant à n'importe lequel parmi les indicateurs de stationnement de paramètre de message (616) ;
supprimer (508) le paramètre apparié de message (418) du message de demande de source pour obtenir un message de demande modifié (420) qui ne comprend pas le paramètre apparié de message (418), en tant que spécifié dans les indicateurs de stationnement de paramètre de message (616) ;
stocker (510) le paramètre apparié de message (418) dans une zone d'attente (422) ;
communiquer (512) le message de demande modifié (420) au système cible (108) ;
recevoir (514) un message de réponse résultant de la communication du message de demande modifié ;
récupérer (516) le paramètre apparié de message (418) sous forme inchangée de la zone d'attente ;
ajouter (518) le paramètre apparié de message (418) au message de réponse pour obtenir un message de réponse modifié qui contient le paramètre apparié de message (418) inchangé ; et
communiquer (520) le message de réponse modifié au système source (102).

6. Le procédé d'après la revendication 5, comprenant en outre le fait de :
recevoir le message de demande de source du système source via une interface de service web.

7. Le procédé d'après une des revendications précédentes 5 ou 6, comprenant en outre le fait de :
déterminer le paramètre apparié de message (418) pour la récupération à partir de la zone d'attente en se basant sur un contexte fourni avec le message de réponse.

8. Le procédé d'après une des revendications précédentes de 5 à 7, comprenant en outre le fait de :
exécuter une logique de transformation de message pour convertir le message de demande de source en un format requis par le système cible.

9. Un produit programme informatique comprenant une logique, laquelle, quand elle est exécutée, met en oeuvre le procédé d'après une des revendications de 5 à 8.
